# FASCICULE DE BREVET EUROPEEN

(11) **EP 1 135 644 B1**
(45) Date de publication et mention de la délivrance du brevet: **09.04.2003**
(21) Numéro de dépôt: 99956141.8
(22) Date de dépôt: 25.11.1999
(51) Int. Cl.: F16L 37/23

(54) **COUPLEUR A BILLES**
KUGELKUPPLUNG
BALL-BEARING COUPLER

(30) Priorité: 02.12.1998 FR 9815217; 18.01.1999 FR 9900445
(43) Date de publication de la demande: 26.09.2001
(73) Titulaire: LEGRIS SA, F-35014 Rennes (FR)
(72) Inventeur: LE CLINCHE, Pascal, F-35000 Rennes (FR)
(74) Mandataire: Robert, Jean-Pierre
(86) Numéro de dépôt international: FR9902907
(87) Numéro de publication internationale: WO00032977

(56) Documents cités:
- DE-B- 1 212 797
- GB-A- 2 021 722
- US-A- 1 879 364

## Description

La présente invention concerne un coupleur à billes utilisable notamment dans les circuits de transport de fluide sous pression pour le raccord rapide de deux éléments du circuit tels qu'une conduite et un organe émetteur ou receveur de fluide ou deux conduites.

On connaît des coupleurs à billes qui comprennent un embout tubulaire mâle présentant un redan annulaire externe et un embout tubulaire femelle pour recevoir l'embout tubulaire mâle, les embouts étant destinés à être associés chacun à un élément du circuit. Le maintien de l'embout mâle dans l'embout femelle est assuré par l'intermédiaire des billes appliquées en butée derrière le redan annulaire par des moyens de verrouillage.

Les moyens de verrouillage comprennent généralement une cage de maintien des billes montée par une extrémité sur l'embout femelle pour se prolonger au-delà de celui-ci et une douille montée sur la cage de maintien pour être mobile axialement entre des première et seconde positions. La douille comprend des surfaces internes de came décalées axialement les unes par rapport aux autres et agencées de telle façon que, lorsque la douille est dans sa première position, les billes sont maintenues en saillie à l'intérieur de la cage de maintien pour retenir le redan annulaire de l'embout mâle et, lorsque la douille est dans sa seconde position, les billes sont libérées radialement et peuvent être amenées dans une position escamotée par rapport à leur position en saillie en coopérant avec le redan annulaire pour permettre le retrait de celui-ci.

De tels coupleurs à billes sont largement utilisés dans l'industrie en raison de la rapidité de raccordement qu'ils permettent. De plus, la connexion est simple et peut être réalisée par une main d'oeuvre non spécialisée. Cependant, lorsqu'un effort de traction est appliqué sur un des éléments raccordés, il existe un risque que la douille vienne en butée sur un élément s'étendant à proximité du coupleur et soit déplacée axialement par rapport à la cage de maintien. Ce déplacement peut conduire, si le circuit est sous pression, à une déconnexion brutale de la conduite ce qui équivaut à une rupture et, en outre, avec un effet "coup de fouet" d'autant plus important que la pression du fluide dans le circuit est élevée.

Il est connu du document GB-A-2 021 722, un coupleur à billes ayant un axe longitudinal et comprenant un embout tubulaire mâle pourvu d'un redan annulaire externe, un embout tubulaire femelle formé d'un manchon présentant des lumières pour former une cage de maintien de billes de blocage de l'embout mâle dans un état connecté dans l'embout femelle et une douille coaxiale au manchon et montée sur celui-ci par l'intermédiaire de moyens de guidage de la douille en rotation autour de l'axe longitudinal du coupleur permettant un débattement angulaire de la douille par rapport au manchon entre des première et seconde positions. La douille comprend des moyens internes de logement des billes de blocage présentant pour chacune de celles-ci un premier chambrage s'étendant en regard de la lumière correspondante pour la première position de la douille pour former une butée de maintien de la bille concernée dans une position en saillie à l'intérieur du manchon pour délimiter un passage de section inférieure à celle du redan annulaire externe et un deuxième chambrage relié au premier chambrage par une paroi inclinée et décalé par rapport au premier chambrage d'un angle correspondant au débattement angulaire pour recevoir la bille concernée dans une position escamotée par rapport à sa position en saillie pour délimiter un passage de section au moins égal à celle du redan annulaire externe pour la seconde position de la douille.

Ainsi, le déverrouillage du raccordement est réalisé en faisant pivoter la douille par rapport au manchon. Le risque qu'un tel mouvement soit d'origine accidentelle est limité. La probabilité d'un déverrouillage intempestif du coupleur est donc réduite. Toutefois, il n'est pas possible de réaliser une connexion instantanée avec un tel coupleur.

Selon l'invention, on prévoit un coupleur du type précédent dans lequel les lumières sont allongées et s'étendent parallèlement à l'axe longitudinal du coupleur, chaque premier chambrage s'étend en regard d'une partie de la lumière adjacente à l'extrémité libre du manchon, la douille comporte un chambrage annulaire supplémentaire relié par une paroi inclinée aux premiers chambrages pour s'étendre en regard des parties des lumières s'étendant de façon adjacente à l'extrémité fixée du manchon afin de recevoir les billes en position escamotée, une bague étant montée dans le chambrage supplémentaire pour coulisser entre une position de dégagement du chambrage supplémentaire et une position d'obturation du chambrage supplémentaire dans laquelle elle est rappelée élastiquement et pousse les billes dans les premiers chambrages.

Ainsi, le raccordement de l'embout mâle est effectué simplement en insérant celui-ci dans le manchon jusqu'à ce que les billes poussées par le redan annulaire s'escamotent dans le chambrage annulaire supplémentaire et reviennent dans les premiers chambrages en position en saillie après le passage du redan annulaire sous l'effet du rappel élastique de la bague en position d'obturation. L'opération de connexion est alors rapide et particulièrement simple.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1 est une vue en coupe longitudinale d'un coupleur à billes selon un premier mode de réalisation de l'invention,
- la figure 2 est une vue analogue à la figure 1 du coupleur à billes au moment de l'introduction de l'embout mâle,
- la figure 3 est une vue analogue à la figure 1 du coupleur à billes, l'embout mâle étant verrouillé en position raccordée,
- les figures 4, 5 et 6 sont des vues en coupe transversale du coupleur à billes, respectivement selon les lignes IV-IV, V-V, VI-VI de la figure 3,
- la figure 7 est une vue analogue à la figure 1 du coupleur à billes lors du retrait de l'embout mâle,
- la figure 8 est une vue en coupe transversale du coupleur à billes selon la ligne VIII-VIII de la figure 7,
- la figure 9 est une vue en coupe longitudinale d'un coupleur à billes, dans un état connecté, selon un deuxième mode de réalisation de l'invention,
- les figures 10 et 11 sont des vues en coupe transversale du coupleur à billes, respectivement selon les lignes X-X et XI-XI de la figure 9,
- la figure 12 est une vue analogue à la figure 9, du coupleur à billes selon le deuxième mode de réalisation, en cours de déconnexion,
- les figures 13 et 14 sont des vues en coupe transversale du coupleur à billes, respectivement selon les lignes XIII-XIII et XIV-XIV de la figure 12,
- la figure 15 est une vue analogue à la figure 9 du coupleur à billes selon le deuxième mode de réalisation, en position de purge,
- la figure 16 est une vue analogue à la figure 9 du coupleur à billes en fin de déconnexion,
- les figures 17 et 18 sont des vues en coupe transversale du coupleur à billes respectivement selon les lignes XVII-XVII et XVIII-XVIII de la figure 16.

Le coupleur à billes selon l'invention est destiné au raccordement rapide de deux éléments d'un circuit de fluide sous pression.

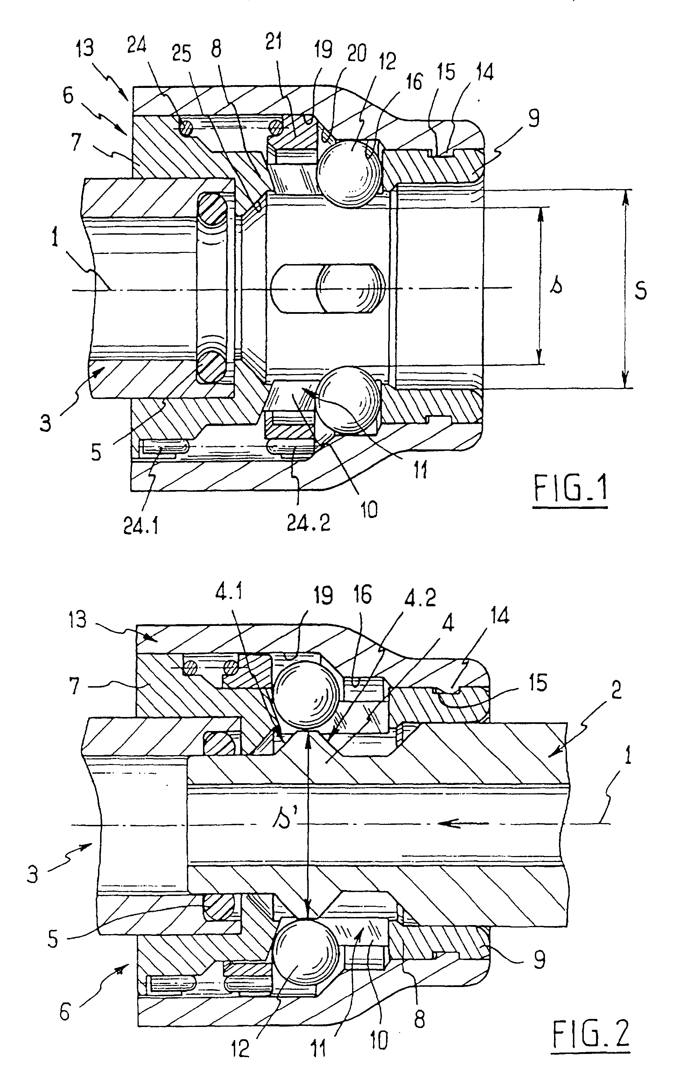

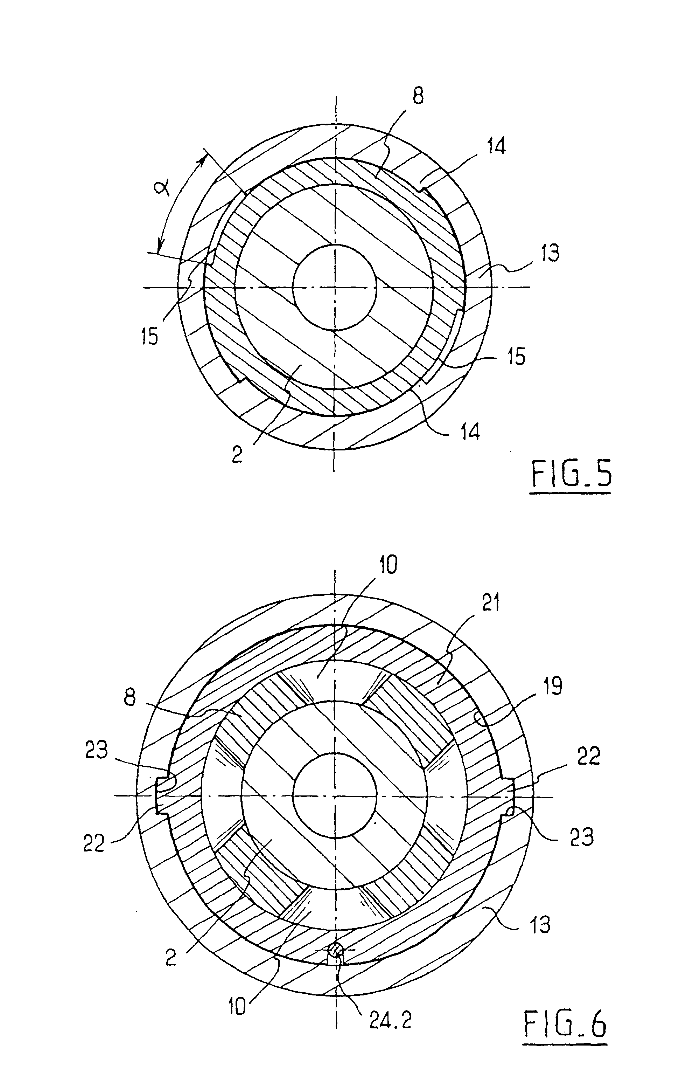

En référence aux figures 1 à 8, le coupleur à billes selon le premier mode de réalisation de l'invention, d'axe longitudinal 1, comprend un embout tubulaire mâle généralement désigné en 2 et un embout tubulaire femelle généralement désigné en 3. L'embout tubulaire mâle comprend un redan annulaire externe 4 ayant des parois latérales 4.1, 4.2 convergentes. L'embout mâle 2 est destiné à être monté sur une conduite et à être inséré dans l'embout femelle 3. L'embout femelle 3 comprend un joint torique 5 destiné à assurer l'étanchéité de son raccordement avec l'embout mâle 2. L'embout femelle 3 est destiné à être monté sur un organe à alimenter en fluide sous pression ou sur une autre conduite.

Le coupleur à billes comprend en outre un manchon, généralement désigné en 6, monté par une de ses extrémités 7 sur l'embout femelle 3 pour s'étendre coaxialement à celui-ci. Le manchon 6 comprend une partie 8 de section interne circulaire S, supérieure à la section s' du redan annulaire 4, s'étendant au-delà de l'embout femelle 3 et une extrémité libre 9 opposée à l'extrémité 7. La partie 8 du manchon 6 présente des lumières 10 allongées s'étendant parallèlement à l'axe longitudinal 1 à 90° les unes par rapport aux autres. Les lumières 10 sont délimitées par des bords 11 qui convergent l'un vers l'autre en direction de l'intérieur du manchon.

Des billes 12 sont reçues dans les lumières 10 et ont un diamètre supérieur à la dimension transversale de la plus petite ouverture délimitée par les bords 11 de manière que les billes 12 ne peuvent pénétrer à l'intérieur du manchon 6. Le manchon 6 forme ainsi une cage de maintien des billes 12 dans le coupleur.

Une douille 13 est montée pour pivoter sur le manchon 6 par l'intermédiaire de deux portions de couronne 14 s'étendant en saillie à l'intérieur de la douille 13 pour être reçues dans deux portions de gorge 15 ménagées extérieurement sur le manchon 6. Les dimensions respectives des portions de couronne 14 et des portions de gorge 15 sont déterminées de manière à permettre un débattement angulaire α de la douille 13 par rapport au manchon 6 égal ici à environ 35°. Il est ainsi défini une première et une seconde position angulaire extrêmes de la douille 13 par rapport au manchon 6. On pourrait bien entendu prévoir une cage de maintien comprenant un nombre de lumières différent de quatre pour recevoir un nombre correspondant de billes. Le débattement angulaire α devra en outre être modifié pour correspondre au décalage angulaire des lumières les unes par rapport aux autres.

La douille 13 comprend des moyens internes de logement des billes 12.

Ces moyens comprennent des premiers chambrages 16 s'étendant chacun en regard d'une partie d'une lumière 10 adjacente à l'extrémité libre 9 du manchon 6 lorsque la douille 13 est dans sa première position. Les premiers chambrages 16 ont une profondeur déterminée de manière que les billes 12 reçues dans les premiers chambrages 16 délimitent un passage ayant une section s inférieure à la section s' du redan annulaire 4.

Des deuxièmes chambrages 17, décalés angulairement d'un angle égal à l'angle α par rapport aux premiers chambrages 16 sont ménagés dans la douille 13 et sont reliés aux premiers chambrages 16 par une paroi inclinée 18. On comprend que du fait du décalage angulaire existant entre chaque premier chambrage 16 et chaque deuxième chambrage 17, chaque deuxième chambrage 17 s'étend en regard d'une lumière 10 lorsque la douille 13 est dans sa deuxième position. La profondeur des deuxièmes chambrages 17 est déterminée de manière que lorsque les billes 12 sont reçues dans les deuxièmes chambrages 17, elles délimitent un passage de section au moins égal à la section s' du redan annulaire 4.

Les moyens de logement des billes 12 comprennent également un troisième chambrage 19. Le troisième chambrage 19 est annulaire et est décalé axialement par rapport au premier chambrage 16 de manière à s'étendre en regard des parties des lumières 10 qui s'étendent de façon adjacente à l'extrémité 7 du manchon 6. Le troisième chambrage 19 est relié aux premiers chambrages 16 par une paroi conique 20. Le diamètre du troisième chambrage 19 est déterminé de manière que les billes reçues dans ledit troisième chambrage 19 délimitent un passage de section au moins égale à la section s' du redan annulaire 4.

Une bague 21 est montée pour coulisser dans le troisième chambrage 19. La bague 21 comprend deux languettes longitudinales 22 reçues dans des rainures longitudinales 23 du troisième chambrage 19 empêchant toute rotation de la bague 21 par rapport à la douille 13. La bague 21 est montée coulissante entre une position de dégagement du troisième chambrage 19 dans laquelle la bague 21 libère un espace suffisant dans le troisième chambrage 19 pour recevoir les billes 12 et une position d'obturation du troisième chambrage 19 dans laquelle la bague 21 est rappelée élastiquement par un ressort 24 et pousse les billes 12 dans les premiers chambrages 16. Le ressort 24 est un ressort hélicoïdal intercalé entre le manchon 6 et la bague 21. Le ressort 24 a une extrémité 24.1 solidaire du manchon 6 et une extrémité opposée 24.2 solidaire de la bague 21. On comprend que le ressort 24 travaille ainsi en compression pour ramener la bague 21 dans sa position d'obturation et en torsion pour ramener la douille 13 dans sa première position.

En référence aux figures 1 et 2, la douille 13 étant dans sa première position et les billes 12 étant reçues dans les premiers chambrages 16, le raccordement de l'embout mâle 2 à l'embout femelle 3 est réalisé en introduisant l'embout mâle 2 dans le manchon 6. La surface 4.1 du redan annulaire, du fait de son inclinaison, pousse les billes 12 dans le troisième chambrage 19 dans leur position escamotée, les billes 12 entraînant la bague 21 dans sa position de dégagement.

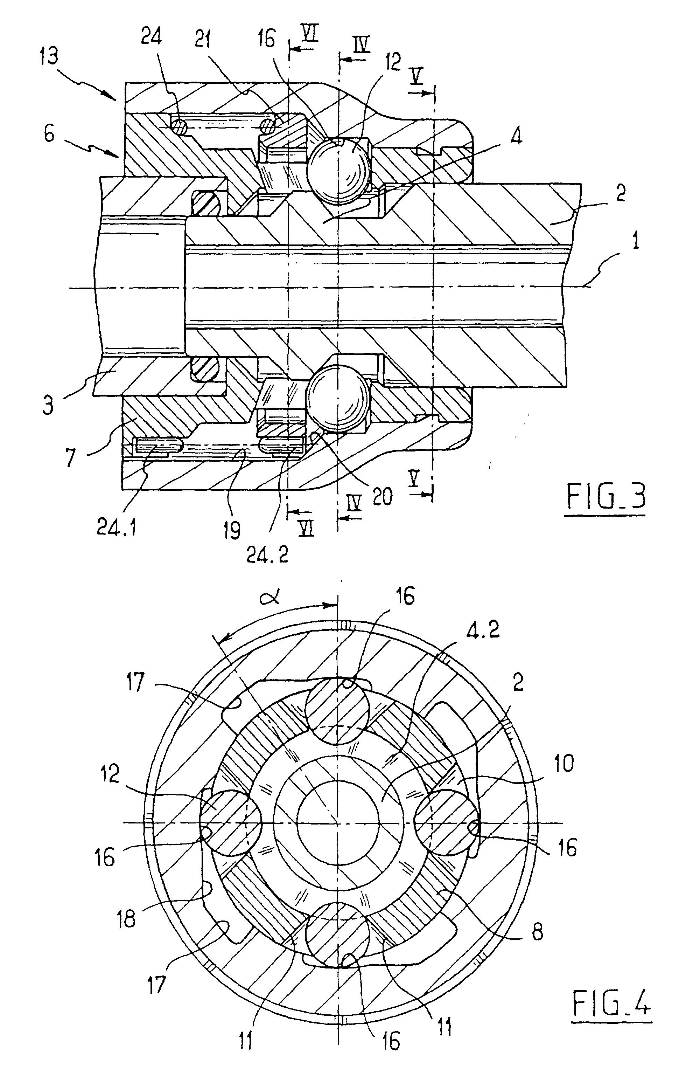

Le redan annulaire 4 peut alors être inséré au-delà des billes pour venir en butée d'un épaulement conique 25 du manchon 6 s'étendant à l'entrée de l'embout femelle 3. Au fur et à mesure de cette insertion, les billes 12, amenées sur la paroi 4.2 et contre la paroi inclinée 20 sous l'effet de l'effort exercé par le ressort 24 sur la bague 21 revenant dans sa position d'obturation, reviennent dans leur position en saillie dans les premiers chambrages 16. Une fois la bague 21 dans sa position d'obturation, les billes 12 sont dans les premiers chambrages 16 dont le fond maintient les billes dans leur position en saillie (figures 3, 4, 5 et 6).

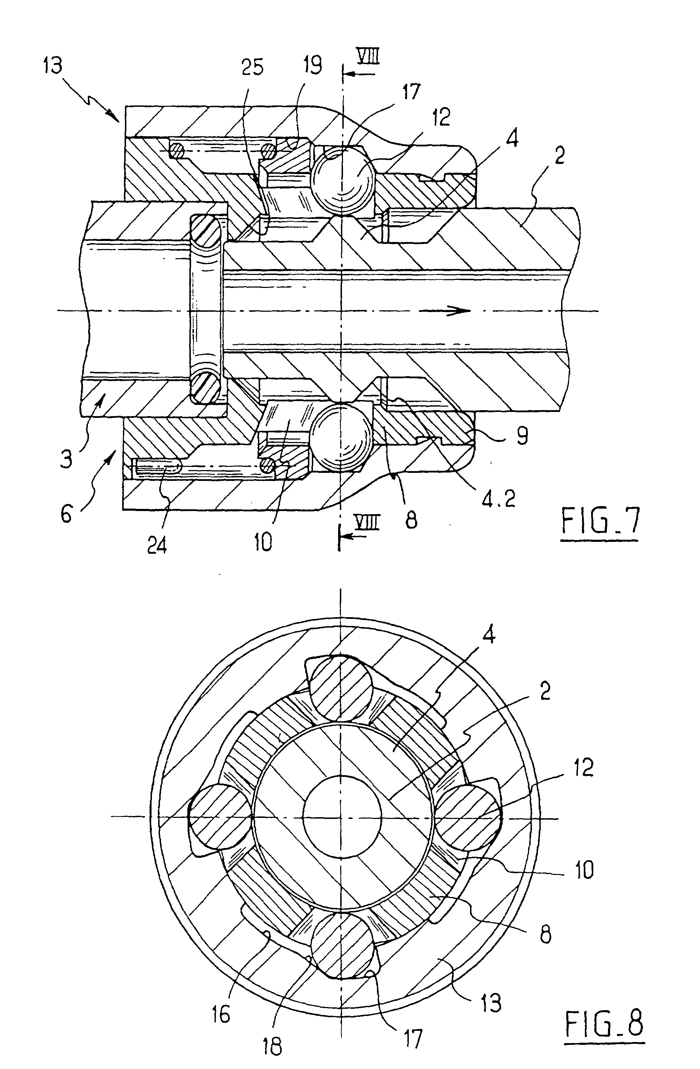

En référence aux figures 7 et 8, la déconnexion est effectuée en faisant pivoter la douille 13 de l'angle α dans le sens horaire pour l'amener dans sa deuxième position en s'opposant à l'action du ressort 24. Les deuxièmes chambrages 17 s'étendent alors en regard des lumières 10. L'embout mâle 2 est alors tiré vers l'arrière de sorte que la paroi conique 4.2 constitue une rampe amenant les billes 12 dans leur position escamotée dans les deuxièmes chambrages 17. Une fois le redan annulaire 4 passé, l'opérateur relâche la douille 13 qui, sous l'effet du ressort 24, revient dans sa première position. Les billes reviennent alors dans les premiers chambrages 16 par l'intermédiaire des parois inclinées 18 et se retrouvent dans leur position en saillie dans laquelle elles sont maintenues par le fond des premiers chambrages 16.

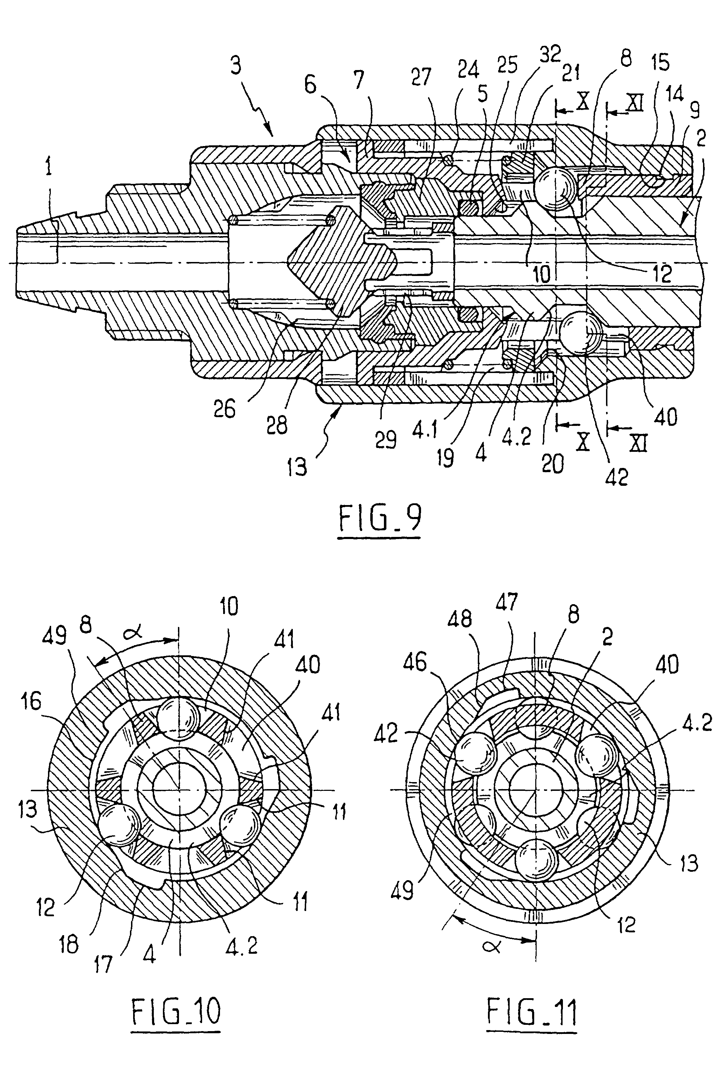

Le coupleur à billes selon le deuxième mode de réalisation de l'invention va maintenant être décrit en référence aux figures 9 à 18, les éléments identiques ou analogues à ceux décrits précédemment portant une référence numérique identique.

Comme précédemment, le coupleur à billes selon ce mode de réalisation a un axe longitudinal 1 et comprend un embout tubulaire mâle 2 et un embout tubulaire femelle 3. L'embout tubulaire mâle comprend un redan annulaire externe 4 ayant des parois latérales 4.1, 4.2 convergentes. L'embout mâle 2 est destiné à être monté sur une conduite et à être inséré dans l'embout femelle 3. L'embout femelle 3 est ici associé à une partie mâle destinée à être insérée dans une conduite.

L'embout femelle 3 est ici conformé pour délimiter un chambrage 26 avec une pièce tubulaire d'extrémité 27 formant un siège pour un clapet 28 monté pour coulisser dans le chambrage 26 entre une position d'obturation de l'embout femelle dans laquelle le clapet 26 est rappelé élastiquement par un ressort contre la pièce d'extrémité 27 et une position d'ouverture dans laquelle le clapet 28 est écarté de la pièce d'extrémité 27 et délimite un orifice annulaire d'écoulement. Le clapet comprend une queue 29 tubulaire et ajourée s'étendant du côté opposé au ressort de rappel élastique dans la pièce d'extrémité 27.

Comme dans le premier mode de réalisation, le coupleur à billes comprend un manchon 6 ayant des extrémités 7 et 9 et une partie 8 présentant des lumières 10 allongées recevant des billes 12. Les lumières 10 sont ici au nombre de 3 et s'étendent à 120° les unes par rapport aux autres.

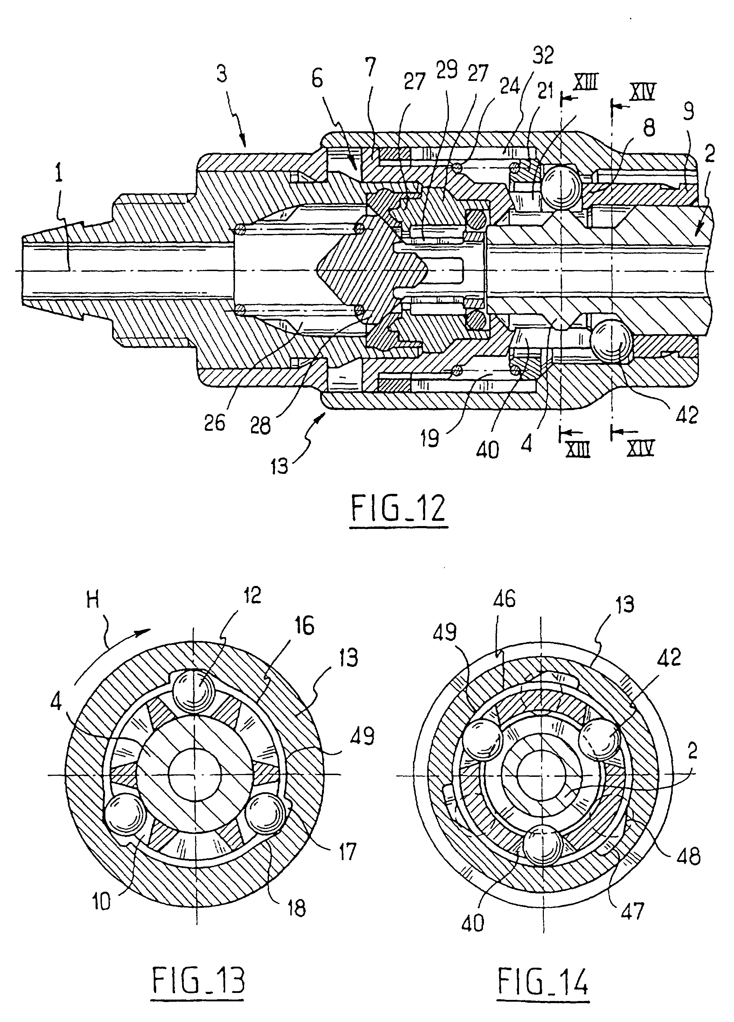

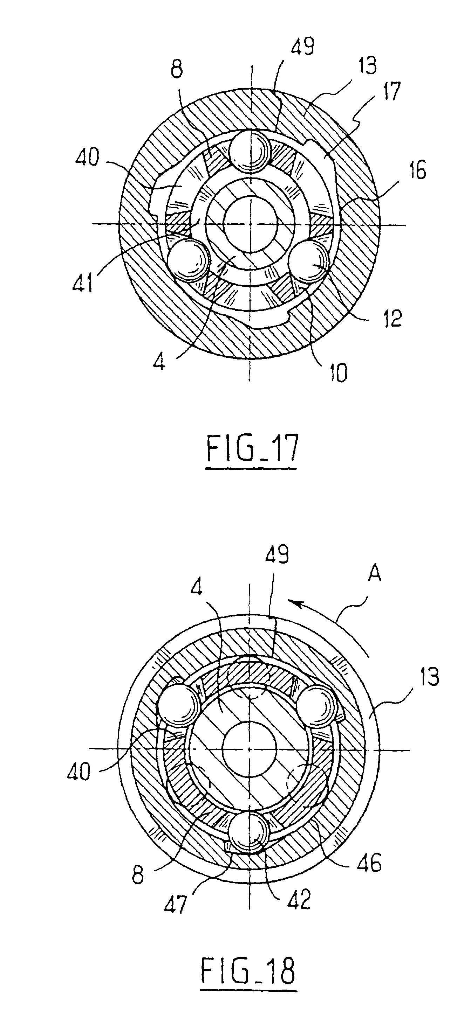

La douille 13 est ici montée pour pivoter sur le manchon 6 par l'intermédiaire de portions de couronne 14 reçues dans des portions de gorge 15 ménagée extérieurement sur le manchon 6 de manière à permettre un débattement angulaire α de la douille 13 par rapport au manchon 6 de part et d'autre d'une position intermédiaire, dite première position (représentée aux figures 10 et 11), dans laquelle la douille 13 est rappelée élastiquement par l'intermédiaire de lames élastiques 32 s'étendant axialement pour avoir leurs extrémités solidaires respectivement du manchon 6 et de la douille 13. Il est ainsi défini deux positions angulaires extrêmes de la douille 13 par rapport au manchon 6, dites seconde et troisième positions (représentées respectivement aux figures 13 et 14 et aux figures 17 et 18), de chaque côté de la première position selon un décalage angulaire α d'environ 35° par rapport à la première position.

La douille 13 comprend, comme dans le premier mode de réalisation, des moyens internes de logement des billes 12.

Ces moyens comprennent un chambrage annulaire 49 et des chambrages 17 ménagés à 120° les uns des autres dans le chambrage annulaire 49. Le chambrage 49 définit ainsi pour chaque bille 12 entre chaque paire de chambrages 17 adjacents un premier chambrage 16, et chaque chambrage 17 forme un deuxième chambrage associé. Chaque premier chambrage 16 est agencé pour s'étendre en regard de la partie de la lumière 10 située du côté de l'extrémité 9 du manchon 6 lorsque la douille 13 est dans sa première position et également lorsque la douille 13 est dans sa troisième position. Chaque premier chambrage 16 assure le maintien de la bille 12 correspondante en saillie dans le manchon 6 lorsque la douille 13 est dans ses première et troisième positions. Les deuxièmes chambrages 17 sont agencés pour recevoir les billes 12 en position escamotée lorsque la douille 13 est dans sa deuxième position. Des parois inclinées 18 relient chaque premier chambrage 16 au deuxième chambrage 17 associé.

Dans ce deuxième mode de réalisation, la partie 8 du manchon 6 présente également trois autres lumières 40 allongées s'étendant parallèlement à l'axe longitudinal 1 à 120° les unes par rapport aux autres de manière alternée par rapport aux lumières 10. Les lumières 40 sont plus longues que les lumières 10 de manière à avoir une partie s'étendant au-delà de celles-ci en direction de l'extrémité 9 et une partie s'étendant en regard d'un des premiers chambrages 16 lorsque la douille est dans sa première position. Les lumières 40 sont délimitées par des bords 41 qui convergent l'un vers l'autre en direction de l'intérieur du manchon.

Des billes 42 sont reçues dans les lumières 40 de manière identique aux billes 12 dans les lumières 10.

La douille 13 comprend des moyens internes de logement des billes 42 décalés axialement par rapport aux moyens de logement des billes 12 en direction de l'extrémité 9 du manchon 6.

Ces moyens comprennent des chambrages 47 ménagés dans le chambrage annulaire 49 à 120° les uns des autres. Le chambrage annulaire 49 définit ainsi pour chaque bille 42, entre chaque paire de chambrages 47 adjacents, un premier chambrage 46 disposé pour s'étendre en regard d'une des lumières 40 au niveau de la partie de celle-ci adjacente à l'extrémité 9 de manière à maintenir la bille 42 correspondante en saillie lorsque la douille 13 est dans ses première et deuxième positions.

Les chambrages 47 forment des deuxièmes chambrages de telle sorte que chaque deuxième chambrage 47 s'étende en regard de la partie de la lumière 40 concernée adjacente à l'extrémité 9 lorsque la douille 13 est dans sa troisième position. La profondeur des deuxièmes chambrages 47 est déterminée de manière que lorsque les billes 42 sont reçues dans les deuxièmes chambrages 47, elles sont en position escamotée pour délimiter un passage de section au moins égale à la section du redan annulaire 4. Les deuxièmes chambrages 47 sont reliés aux premiers chambrages 46 par une paroi inclinée 48.

La douille 13 comprend également des moyens internes de logement des billes 12 et 42 qui comportent un chambrage supplémentaire 19 annulaire et décalé axialement par rapport au chambrage annulaire 49 en direction de l'extrémité 7 du manchon 6 pour s'étendre en regard des parties des lumières 10 et 40 adjacentes à l'épaulement 25. Le chambrage supplémentaire 19 est relié au chambrage annulaire 49 par une paroi conique 20 pour recevoir les billes 12 et 42 en position escamotée. Le chambrage supplémentaire est obturable par l'intermédiaire d'une bague 21 montée pour coulisser dans ce chambrage supplémentaire entre une position de dégagement dans laquelle la bague 21 libère un espace suffisant dans le chambrage supplémentaire 19 pour recevoir les billes 12 et 42 et une position d'obturation du chambrage supplémentaire 19 dans laquelle la bague 21 est rappelée élastiquement par un ressort 24 et pousse les billes 12 et 42 dans le chambrage 16.

La connexion est effectuée de façon identique au premier mode de réalisation. La douille 13 étant dans sa première position, les premiers chambrages 16 de logement des billes 12 s'étendent en regard des lumières 10 et des lumières 40 et les premiers chambrages 46 de logement des billes 42 s'étendent en regard des lumières 40, chaque premier chambrage 16 communiquant en regard de la lumière 40 avec le premier chambrage 46 concerné. Lors de l'introduction de l'embout mâle 2, les billes 12 et 42 sont poussées dans le chambrage supplémentaire 19 par la paroi 4.1 du redan annulaire 4 de l'embout mâle, les billes 42 transitant alors par les premiers chambrages 16 de logement des billes 12. Une fois le redan annulaire passé, les billes 12 et 42 reviennent dans leur position en saillie. Les billes 12 en butée contre la paroi 4.2 du redan annulaire 4 et contre l'extrémité des lumières 10 du côté de l'extrémité 9 du manchon 6 assurent le blocage de l'embout mâle 2 dans l'embout femelle 3 dans une position correspondant à l'état connecté. L'extrémité de l'embout mâle 2 est alors en appui contre la queue 29 du clapet 28 et décolle celui-ci de son siège pour permettre l'écoulement du fluide de l'embout femelle 3 vers l'embout mâle 2 (voir les figures 9 à 11), le joint torique 5 en contact autour de l'embout mâle assurant l'étanchéité de la connexion.

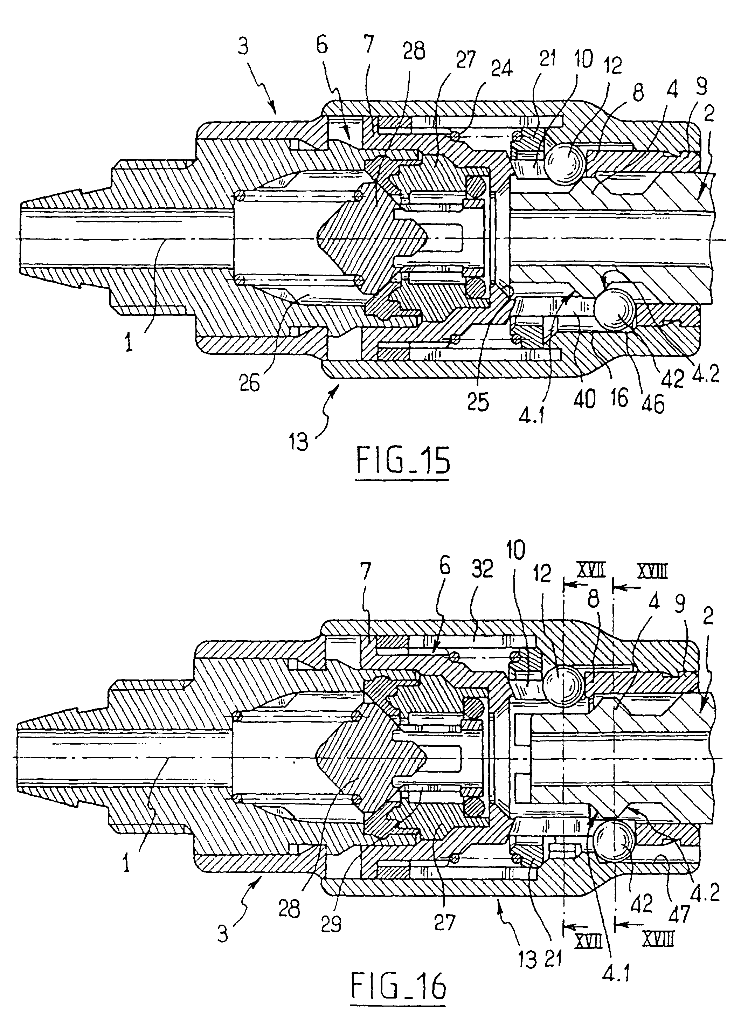

En référence aux figures 12 à 14, la déconnexion débute en faisant pivoter la douille 13 de l'angle α dans le sens horaire (flèche H, figure 13) pour l'amener dans sa deuxième position en s'opposant à l'action des lames de ressort 32. Les deuxièmes chambrages 17 s'étendent alors en regard des lumières 10 tandis que les premiers chambrages 46 de logement des billes 42 s'étendent en regard des lumières 40. Les billes 12 n'étant alors plus maintenues en saillie, l'embout mâle est repoussé vers l'arrière sous l'effet de la pression du fluide circulant et du ressort de rappel du clapet de sorte que la paroi conique 4.2 constitue une rampe amenant les billes 12 dans leur position escamotée dans les deuxièmes chambrages 17. Le clapet 28 vient alors en appui contre son siège obturant ainsi le conduit. La paroi conique 4.2 arrivant en contact contre les billes 42 pousse celles-ci le long des lumières 40 jusqu'à ce que les billes 42 arrivent en butée contre l'extrémité des lumières 40 adjacente à l'extrémité 9 du manchon 6. Les billes 42 retiennent ainsi l'embout mâle 2 dans une position axialement dégagée de l'embout femelle 3 (figure 15).

Dans cette position, l'embout mâle 2 n'est plus en contact avec le joint torique 5 de sorte que l'étanchéité n'est plus assurée entre l'embout femelle 3 et l'embout mâle 2. Le fluide sous pression contenu dans la conduite raccordée à l'embout mâle 2 peut alors s'échapper par l'intermédiaire des chambrages 46 et 47 débouchant à l'extérieur au niveau de l'extrémité de la douille 13 adjacente à l'extrémité 9 pour former des moyens de mise à l'échappement de l'embout mâle en position dégagée. Il est ainsi réalisé une purge du circuit de fluide en aval de l'embout femelle.

La douille 13 est relâchée et revient dans sa première position sous l'action des lames de rappel 32.

La déconnexion se poursuit en faisant pivoter la douille 13 (flèche A figure 18) de l'angle α dans le sens anti-horaire vers sa troisième position en s'opposant à l'action des lames de rappel 32.

En référence aux figures 16 à 18, les deuxièmes chambrages 47 s'étendent alors au regard des lumières 40. L'embout mâle 2 peut alors être tiré vers l'arrière de sorte que la paroi conique 4.2 constitue une rampe amenant les billes 42 dans leur position escamotée dans les deuxièmes chambrages 47.

Une fois le redan annulaire 4 passé, l'opérateur relâche la douille 13 qui, sous l'effet des lames de rappel 32, revient dans sa première position. Les billes reviennent alors dans les premiers chambrages 46 par l'intermédiaire des parois inclinées 48 et se retrouvent dans leur position en saillie dans laquelle elles sont maintenues par le fond des premiers chambrages 46.

Bien entendu l'invention n'est pas limitée aux modes de réalisation décrit et on peut y apporter des variantes de réalisation sans sortir du cadre de l'invention tel que défini par les revendications.

En particulier, la troisième position de la douille 13 pourrait être axialement décalée par rapport aux deux autres positions.

## Revendications

1. Coupleur à billes ayant un axe longitudinal (1) et comprenant un embout tubulaire mâle (2) pourvu d'un redan annulaire externe (4), un embout tubulaire femelle (3) sur lequel est fixé coaxialement par une extrémité (7) un manchon tubulaire (6) se prolongeant au-delà de l'embout femelle et présentant des lumières (10) pour former une cage de maintien de billes (12) de blocage de l'embout mâle dans un état connecté dans l'embout femelle et une douille (13) coaxiale au manchon (6) et montée sur celui-ci par l'intermédiaire de moyens de guidage (15) de la douille en rotation autour de l'axe longitudinal du coupleur permettant un débattement angulaire (α) entre des première et seconde positions, la douille comprenant pour chaque bille de blocage un premier chambrage (16) s'étendant en regard de la lumière correspondante pour la première position de la douille pour former une butée de maintien de la bille concernée dans une position en saillie à l'intérieur du manchon (6) pour délimiter un passage de section inférieure à celle du redan annulaire externe (4) et un deuxième chambrage (17) relié au premier chambrage par une paroi inclinée (18) et décalé par rapport au premier chambrage d'un angle (α) correspondant au débattement angulaire pour recevoir la bille de blocage dans une position escamotée par rapport à sa position en saillie pour délimiter un passage de section au moins égal à celle du redan annulaire externe, **caractérisé en ce que** les lumières (10) sont allongées et s'étendent parallèlement à l'axe longitudinal (1) du coupleur, **en ce que** chaque premier chambrage (16) s'étend en regard d'une partie de la lumière (10) adjacente à l'extrémité libre (9) du manchon, **en ce que** la douille comprend un chambrage annulaire supplémentaire (19) relié par une paroi inclinée (20) aux premiers chambrages (16) pour s'étendre en regard des parties des lumières (10) s'étendant de façon adjacente à l'extrémité fixée (7) du manchon (6) de manière à recevoir les billes (12) en position escamotée, et **en ce qu'**une bague (21) est montée dans le chambrage supplémentaire (19) pour coulisser entre une position de dégagement du troisième chambrage et une position d'obturation du troisième chambrage dans laquelle elle est rappelée élastiquement et pousse dans les premiers chambrages (16) les billes (12).

2. Coupleur à billes selon la revendication 1, **caractérisé en ce qu'**il comprend un ressort hélicoïdal (24) intercalé entre la bague (21) et le manchon (6) pour assurer le rappel élastique de la bague dans sa position d'obturation.

3. Coupleur à billes selon la revendication 1 ou la revendication 2, comprenant un clapet (28) monté dans l'embout femelle (3) pour être mobile entre une position d'obturation de l'embout femelle dans laquelle il est rappelé élastiquement et une position d'ouverture dans laquelle il est amené par l'embout mâle (2) lorsque celui-ci est connecté à l'embout femelle, **caractérisé en ce que** le manchon (6) présente des lumières (40) pour former une cage de maintien de billes (42) de retenue de l'embout mâle (2) dans une position dégagée de l'embout femelle (3), les billes de retenue (42) étant décalées axialement vers l'extrémité libre du manchon (6) par rapport aux billes de blocage (12), la douille (13) étant montée sur le manchon pour être mobile vers une troisième position et comprenant des moyens internes de logement des billes de retenue (42) tels que les billes de retenue sont dans une position en saillie à l'intérieur du manchon pour délimiter un passage de section inférieure à celle du redan annulaire externe (4) au moins lorsque la douille est dans sa deuxième position et tels que les billes de retenue sont dans une position escamotée par rapport à leur position en saillie pour délimiter un passage de section au moins égale à celle du redan annulaire lorsque la douille est dans sa troisième position, et **en ce que** le coupleur comprend des moyens de mise à l'échappement de l'embout mâle en position dégagée.

4. Coupleur à billes selon la revendication 3, **caractérisé en ce que** la douille (13) est montée sur le manchon (6) pour pivoter dans sa troisième position située en décalage angulaire par rapport à sa deuxième position, **en ce que** les moyens de logement des billes de retenue (42) comprennent pour chaque bille de retenue, un premier chambrage (46) s'étendant en regard de la lumière correspondante (40) au moins pour la deuxième position de la douille (13) pour former une butée de maintien de la bille de retenue dans sa position en saillie et un deuxième chambrage (47) relié au premier chambrage par une paroi inclinée (48) et décalé par rapport au premier chambrage d'un angle (α) correspondant au décalage angulaire pour recevoir la bille de retenue dans sa position escamotée pour la troisième position de la douille.

5. Coupleur à billes selon la revendication 4, **caractérisé en ce que** la première position de la douille est située entre sa deuxième et sa troisième positions, et **en ce que** la douille est rappelée élastiquement dans sa première position.

6. Coupleur à billes selon la revendication 4 ou la revendication 5, **caractérisé en ce que** les premier et deuxième chambrages (46, 47) des moyens internes de logement des billes de retenue (42) débouchent au niveau de l'extrémité de la douille (13) adjacente à l'extrémité libre (9) du manchon (6) pour former une partie des moyens de mise à l'échappement de l'embout mâle (2) en position dégagée.

7. Coupleur à billes selon l'une des revendications 4 à 6, **caractérisé en ce que**, lorsque la douille (13) est dans sa première position, une partie de chaque premier chambrage (16) de logement des billes de blocage (12) et une partie de chaque premier chambrage (46) de logement des billes de retenue (42) s'étendent en regard d'une lumière (40) associée à la bille de retenue (42) correspondante et communiquent l'une avec l'autre.

## Claims

1. A ball coupling having a longitudinal axis (1) and comprising a male tubular endpiece (2) provided with an outer annular collar (4), a female tubular endpiece (3) on which there is fixed coaxially one end (7) of a tubular sleeve (6) which extends beyond the female endpiece and which has slots (10) for forming a ball-holding cage to hold locking balls (12) for locking the male endpiece in a coupled state inside the female endpiece, and a thimble (13) mounted coaxially around the sleeve (6) via guide means (15) enabling the thimble to be guided in rotation about the longitudinal axis of the coupling so as to enable it to turn through a turn angle (α) between a first position and a second position, the thimble comprising, for each locking ball, a first recess (16) extending in register with the corresponding slot for the first position of the thimble so as to form an abutment that holds the corresponding ball in a position in which it projects into the inside of the sleeve (6) so as to define a passage of section that is smaller than the section of the outer annular collar (4), and a second recess (17) connected to the first recess by a sloping wall (18) and offset relative to the first recess by an angle (α) corresponding to the turn angle so as to receive the locking ball in a position in which it is retracted from its projecting position so as to define a passage of section not less than that of the outer annular collar, the coupling being **characterized in that** the slots (10) are elongate and extend parallel to the longitudinal axis (1) of the coupling, **in that** each first recess (16) extends in register with a portion of the slot (10) adjacent to the free end (9) of the sleeve, **in that** the thimble has an additional annular recess (19) connected via a sloping wall (20) to the first recesses (16) so as to extend in register with the portions of the slots (10) that extend adjacent to the fixed end (7) of the sleeve (6) so as to receive the locking balls (12) in the retracted position, and **in that** a ring (21) is mounted in the additional recess (19) to slide between a disengaged position in which it disengages the third recess and an obstruction position in which it obstructs the third recess, into which position the ring is urged resiliently so as to push the locking balls (12) into the first recesses.

2. A ball coupling according to claim 1, **characterized in that** it comprises a helical spring (24) interposed between the ring (21) and the sleeve (6) to urge the ring resiliently towards its obstruction position.

3. A ball coupling according to claim 1 or claim 2, including a valve member (28) mounted in the female endpiece (3) to move between a closed position in which it closes the female endpiece, into which position it is urged resiliently, and an open position into which it is moved by the male endpiece (2) when the male endpiece is coupled to the female endpiece, the coupling being **characterized in that** the sleeve (6) has slots (40) for forming a ball-holding cage for holding retaining balls (42) for retaining the male endpiece (2) in a disengaged position relative to the female endpiece (3), the retaining balls (42) being axially offset towards the free end of the sleeve (6) relative to the locking balls (12), the thimble (13) being mounted on the sleeve so as to be movable into a third position and having internal means for receiving the retaining balls (42) such that said balls are in a position in which they project into the inside of the sleeve so as to define a passage of section that is smaller than that of the outer annular collar (4) at least when the thimble is in its second position, and such that the retaining balls are in a retracted position relative to their projecting position so as to define a passage not less than that of the annular collar when the thimble is in its third position, and **in that** the coupling has means for connecting the male endpiece to an exhaust when it is in its disengaged position.

4. A ball coupling according to claim 3, **characterized in that** the thimble (13) is mounted on the sleeve (6) to move into its third position which is angularly offset relative to its second position by turning, **in that** the means for housing the retaining balls (42) comprise, for each retaining ball, a first recess (46) extending in register with the corresponding slot (40) at least when the thimble (13) is in its second position so as to form an abutment for holding the retaining ball in its projecting position, and a second recess (47) connected to the first recess by a sloping wall (48) and offset from the first recess by an angle (α) corresponding to the turn angle so as to receive the retaining ball in its retracted position when the thimble is in its third position.

5. A ball coupling according to claim 4, **characterized in that** the first position of the thimble is situated between its second and third positions, and **in that** the thimble is urged resiliently towards its first position.

6. A ball coupling according to claim 4 or claim 5, **characterized in that** the first and second recesses (46, 47) of the internal means for housing the retaining balls (42) open out at the end of the thimble (13) adjacent to the free end (9) of the sleeve (6) so as to form a portion of the means for connecting the male endpiece (2) when in its disengaged position to the exhaust.

7. A ball coupling according to any one of claims 4 to 6, **characterized in that** when the thimble (13) is in its first position, a portion of each first recess (16) for housing a locking ball (12) and a portion of each first recess (46) for housing a retaining ball (42) extend in register with a slot (40) associated with the corresponding retaining ball (42) and are in communication with each other.

## Patentansprüche

1. Kugelkupplung mit einer Längsachse (1) und umfassend einen rohrförmigen Stecknippel (2) mit einer äußeren Ringrippe 4, eine rohrförmige Einsteckmuffe (3), auf der eine rohrförmige Buchse (6) mit einem Ende (7) co-axial befestigt ist, die über die Einsteckmuffe hinaus verlängert ist und Durchbrechungen (10) zur Bildung eines Haltekäfigs für Kugeln (12) zum Sperren des Stecknippels in einem mit der Einsteckmuffe verbundenen Zustand hat, und eine zur Buchse (6) co-axiale Hülse (13), die auf der Buchse mit Hilfe von Mitteln (15) zur Führung der Hülse um die Längsachse der Kupplung drehbar gelagert ist, wobei die Führungsmittel einen Drehwinkelausschlag (α) zwischen einer ersten und einer zweiten Position ermöglichen und wobei die Hülse für jede Sperrkugel eine sich gegenüber der betreffenden Durchbrechung erstreckende erste Einsenkung (16) für die erste Position der Hülse hat, um einen Anschlag zum Halten der betreffenden Kugel in einer Position zu bilden, in der sie in die Buchse (6) hineinragt, um so einen Durchtrittsquerschnitt zu begrenzen, der kleiner als jener der äußeren Ringrippe (4) ist, und eine zweite Einsenkung (17) hat, die mit der ersten Einsenkung über eine Rampenfläche (18) verbunden und gegenüber der ersten Einsenkung um einen dem Drehwinkelausschlag entsprechenden Winkel (α) versetzt ist, um die Sperrkugel in einer Position zu halten, in der sie gegenüber ihrer in die Buchse hineinragenden Stellung ausgerückt ist, und einen Durchtrittsquerschnitt zu begrenzen, der mindestens gleich jenem der äußeren Ringrippe ist, **dadurch gekennzeichnet, daß** die Durchbrechungen (10) länglich sind und sich parallel zu der Längsachse (1) der Kupplung erstrecken, daß jede erste Einsenkung (16) gegenüber einem Abschnitt der Durchbrechung (10) verläuft, der dem freien Ende (9) der Buchse benachbart ist, daß die Hülse eine zusätzliche ringförmige Einsenkung (19) hat, die über eine Rampenfläche (20) an die erste Einsenkung (16) angeschlossen ist und sich gegenüber den Abschnitten der Durchbrechungen (10) erstreckt, die dem festen Ende (7) der Buchse (6) benachbart sind, um so die Kugeln (12) in ihrer ausgerückten Position aufzunehmen, und daß in der zusätzlichen Einsenkung (19) ein Ring (21) gelagert ist, der zwischen einer die dritte Einsenkung freigebenden Position und einer die dritte Einsenkung verschließenden Position verschiebbar ist, in die er elastisch zurückgestellt wird und in der er die Kugeln in die ersten Einsenkungen (16) drückt.

2. Kugelkupplung nach Anspruch 1, **dadurch gekennzeichnet, daß** sie eine Schraubenfeder (24) hat, die zwischen dem Ring (21) und der Muffe (6) angeordnet ist, um die elastische Rückstellung des Ringes in seine Verschlussstellung zu gewährleisten.

3. Kugelkupplung nach Anspruch 1 oder 2, umfassend einen Ventilkörper (28), der in der Einsteckmuffe (3) so angeordnet ist, daß er zwischen einer die Einsteckmuffe verschließenden Stellung, in welche er elastisch zurückgestellt wird, und einer Öffnungsstellung beweglich ist, in welche er durch den Stecknippel (2) gebracht wird, wenn dieser mit der Einsteckmuffe gekuppelt ist, **dadurch gekennzeichnet, daß** die Buchse (6) Durchbrechungen (40) zur Bildung eines Haltekäfigs für Rückhaltekugeln (42) hat, welche den Stecknippel (2) in einer von der Einsteckmuffe (3) entkuppelten Stellung halten, wobei die Rückhaltekugeln (42) gegenüber den Sperrkugeln (12) zum freien Ende der Buchse (6) hin axial versetzt sind und wobei die Hülse (13) auf der Buchse so gelagert ist, daß sie in eine dritte Stellung bewegbar ist und interne Mittel zur Aufnahme der Rückhaltekupplung (42) umfaßt derart, daß die Rückhaltekugeln eine Position, in der sie in die Buchse hineinragen und einen Durchtrittsquerschnitt begrenzen, der kleiner als jener der äußeren Ringrippe (4) ist, zumindest dann einnehmen, wenn sich die Hülse in ihrer zweiten Position befindet, und derart, daß die Rückhaltekugeln eine gegenüber ihrer hineinragenden Position ausgerückte Position einnehmen und einen Durchtrittsquerschnitt begrenzen, der mindestens gleich jenem der Ringrippe ist, wenn sich die Hülse in ihrer zweiten Position befindet, und daß die Kupplung Mittel zur Freigabe des Stecknippels in der entkuppelten Stellung hat.

4. Kugelkupplung nach Anspruch 3, **dadurch gekennzeichnet, daß** die Hülse (13) auf der Buchse (6) für eine Schwenkbewegung in ihre dritte Position gelagert ist, in der sie gegenüber der zweiten Position um einen Winkelbetrag versetzt ist, daß die Mittel zur Aufnahme der Rückhaltekugeln (42) für jede Rückhaltekugel eine erste Einsenkung (46) haben, welche sich gegenüber der entsprechenden Durchbrechung (40) mindestens für die zweite Position der Hülse (13) erstreckt, um einen Halteanschlag für die Rückhaltekugel in ihrer vorspringenden Position zu bilden, und eine zweite Einsenkung (47) hat, die mit der ersten über eine Rampenfläche (48) verbunden ist und gegenüber der ersten Einsenkung um einen dem Winkelversatz entsprechenden Winkel (α) versetzt ist, um die Rückhaltekugel in ihrer ausgerückten Stellung aufzunehmen, wobei sich die Hülse in ihrer dritten Position befindet.

5. Kugelkupplung nach Anspruch 4, **dadurch gekennzeichnet, daß** die erste Position der Hülse zwischen ihrer zweiten und ihrer dritten Position liegt und daß die Hülse elastisch in ihre erste Position zurückgestellt wird.

6. Kugelkupplung nach Anspruch 4 oder 5, **dadurch gekennzeichnet, daß** die erste Einsenkung und die zweite Einsenkung (46, 47) der internen Aufnahmemittel für die Rückhaltekugeln (42) auf Höhe des dem freien Ende (9) der Buchse (6) benachbarten Endes der Hülse (13) münden, um einen Teil der Mittel zur Freigabe des Einstecknippels (2) in der entkuppelten Stellung zu bilden.

7. Kugelkupplung nach einem der Ansprüche 4 bis 6, **dadurch gekennzeichnet, daß** dann, wenn die Hülse (13) ihre erste Position einnimmt, ein Abschnitt jeder ersten Einsenkung (16) zur Aufnahme der Sperrkugeln (12) und ein Abschnitt jeder ersten Einsenkung (46) zur Aufnahme der Rückhaltekugeln (42) gegenüber einer Durchbrechung (40) liegen, die der entsprechenden Rückhaltekugel (42) zugeordnet ist, und miteinander in Verbindung stehen.
